# EUROPÄISCHE PATENTSCHRIFT

(11) **EP 3 014 986 B1**
(45) Veröffentlichungstag und Bekanntmachung des Hinweises auf die Patenterteilung: **26.12.2018**
(21) Anmeldenummer: 15192153.3
(22) Anmeldetag: 29.10.2015
(51) Int. Cl.: A01K 1/02

(54) **ABFERKELBUCHT**
FARROWING PEN
STALLE POUR LA MISE-BAS

(30) Priorität: 31.10.2014 AT 5017614 U
(43) Veröffentlichungstag der Anmeldung: 04.05.2016
(73) Patentinhaber: Schauer Agrotronic GmbH, 4731 Prambachkirchen (AT)
(72) Erfinder: HAGMÜLLER, Werner, 4064 Oftering (AT)
(74) Vertreter: Burger, Hannes

(56) Entgegenhaltungen:
- WO-A1-95/12305
- DE-U1- 9 203 631
- DE-U1-202004 002 751

## Beschreibung

Die Erfindung betrifft eine Abferkelbucht für Sauen.

Abferkelbuchten dienen einer erleichterten Geburt der Sau und dem Schutz der Ferkel. Oftmals wird dabei die Sau in einem in seiner Größe veränderbaren Bereich fixiert. In der Bucht stehen ein oder mehrere Trogbereiche und ein Ferkelnest zur Verfügung. Abferkelbuchten der soeben genannten Art ist beispielsweise aus der DE20207558U1, der DE9203631U1 sowie der WO 95/12305 A1 und der DE202004002751 U1 bekannt geworden.

Nachteilig an bekannten Abferkelbuchten, bei denen Sauen nur zeitweise fixiert werden, ist, dass beim Verändern der Größe der Sauenfixierung der zur Verfügung stehende Platz nur unzureichend ausgenutzt wird, arbeitsrelevante Bereiche wie Trogbereich und Ferkelnest nicht vom Gang aus erreicht werden können oder die Bucht nur sehr umständlich durch Entfernen der Ferkelnestabdeckung betreten werden kann.

Es ist daher eine Aufgabe der vorliegenden Erfindung, die Nachteile bekannter Abferkelbuchten zu überwinden.

Diese Aufgabe wird mit einer Abferkelbucht gemäß den Ansprüchen gelöst.

Eine erfindungsgemäße Abferkelbucht umfasst eine Umrandung, einen Zugangsbereich, einen einen Fressbereich umfassenden Fixierbereich, einen Liegebereich und ein Ferkelnest und ist dadurch gekennzeichnet, dass die Abferkelbucht mindestens eine Abtrenneinheit umfasst, welche beweglich gestaltet ist, so dass sie zumindest zwei Positionen einnehmen kann, und so ausgestaltet und angeordnet ist, dass in der einen Position die Sau im Fixierbereich fixiert wird (Fixierposition) und in der zweiten Position der Zugang der Sau zum Liegebereich ermöglicht wird und gleichzeitig das Ferkelnest vom Liegebereich abgetrennt wird (Ferkelnestposition), wobei das Ferkelnest zwischen Zugangsbereich und Fixierbereich angeordnet ist. Geeignete Umrandungen sind dem Fachmann bekannt. Sie sind so gestaltet, dass sie bezüglich ihrer Dimensionen und ihrer Stabilität ein Ausbrechen von Sau und Ferkeln verhindern. Zumeist sind Umrandungen aus Mauern und/oder Absperrelementen (z.B. Gittern) gefertigt und umfassen insbesondere gerade oder gekrümmte Wandformen Vorzugsweise ist die Umrandung mindestens 50 cm hoch, insbesondere mindestens 80 cm hoch. Die maximale Höhe muss 1,5 m nicht unbedingt überschreiten, kann aber auch durch die Höhe des Stalles begrenzt sein.

Die an eine Umrandung zum Liegebereich anschließende Umrandung des Ferkelnestes können niedriger als die Umrandung der Abferkelbucht ausgebildet sein (z.B. 50 cm zu 110 cm).

In einer bevorzugten Ausführungsform ist die Umrandung der Abferkelbucht als geschlossene Wände ausgeführt. In einer anderen bevorzugten Ausführungsform weist die Umrandung der Abferkelbucht gitterförmige Bereiche auf.

Geeignete Zugangsbereiche sind dem Fachmann bekannt. Sie sind so gestaltet, dass sie einen Zugang zur Abferkelbucht ermöglichen, z.B. für notwendige Arbeiten oder medizinische Versorgung. Bevorzugt wird der Zugangsbereich mit einer Zugangstür in der Umrandung vom Außenbereich abgetrennt.

Der Fixierbereich ist ein Bereich innerhalb der Abferkelbucht, in welchem die Sau fixiert werden kann. Der Fixierbereich wird bevorzugt durch einen Teil der Umrandung begrenzt, wobei die Abtrenneinheit in ihrer einen Position den Fixierbereich von der übrigen Abferkelbucht abtrennt.

Der Liegebereich ist ein Bereich innerhalb der Abferkelbucht, in welchem die Sau (ggf. mit ihren Ferkeln) liegen kann. Der Liegebereich wird bevorzugt durch einen Teil der Umrandung begrenzt, wobei die Abtrenneinheit in ihrer zweiten Position den Liegebereich vom Ferkelnest abtrennt. Die Abferkelbucht ist bevorzugt so ausgestaltet, dass in dem Falle, in dem sich die Abtrenneinheit in der zweiten Position befindet, Fixierbereich und Liegebereich einen zusammenhängenden Bereich bilden.

Der Liegebereich dient vor Allem zum Abferkeln und zum Säugen der Ferkel. Der Fixierbereich kann auch als Fressbereich dienen. Durch die räumliche Trennung der einzelnen Bereiche und die Absperrbarkeit des Fixierbereichs (insbesondere auch in seiner Funktion als Fressbereich) lässt sich die Sicherheit der Ferkel wesentlich erhöhen. So können sich die Ferkel ungefährdet in das Ferkelnest zurückziehen, während sich die Sau in dem Fressbereich aufhält.

Unter einem Ferkelnest wird in diesem Dokument ein durch eine von der Sau nicht zu überwindende Abtrennung getrennter Aufenthaltsbereich für Ferkel verstanden, wobei die Abtrennung (ggf. auch die Abtrenneinheit) jedoch Durchschlupfe für die Ferkel aufweist oder so angeordnet ist, dass die Ferkel unter der Abtrennung hindurchschlüpfen können. Sie dienen dem Schutz der Ferkel und als Rückzugsmöglichkeit.

Gemäß einer bevorzugten Ausführungsform ist das Ferkelnest benachbart vom Zugangsbereich angeordnet, insbesondere auf ein und derselben Seite der Abferkelbucht, bevorzugt an einem Gang. Bevorzugt ist das Ferkelnest so angeordnet, dass es in beiden Positionen der Abtrenneinheit stets vom Zugangsbereich aus bedienbar ist.

Gemäß dieser bevorzugten Ausführungsform sind insbesondere der Zugangsbereich, das Ferkelnest und der Fixierbereich so angeordnet, dass das Ferkelnest zwischen Zugangsbereich und Fixierbereich liegt und mittels eines zusätzlichen Trennelements (z.B. eines Gitters oder Bügels) von dem Fixierbereich getrennt ist. Hierdurch wird ein einfacher und behinderungsfreier Zutritt zu der Abferkelbucht gewährleistet.

Der Fixierbereich ist bevorzugt vom Zugangsbereich aus gesehen am jenseitigen Ende der Abferkelbucht direkt am Rand der Bucht angeordnet.

Die Abtrenneinheit ist so gestaltet, dass sie ohne zusätzliche Ausformungen eine für die Sau unüberwindbare Barriere darstellt. Dazu ist sie insbesondere als (bevorzugt senkrechte) Wand oder als Gitter ("Trenngitter") ausgeformt, bevorzugt mit einer Höhe von mehr als 50 cm, insbesondere 80 cm und mehr. Die maximale Höhe ist zunächst durch die Höhe des Stalls gegeben, eine größere Höhe als 1 m oder gar 1,5 m ist nicht notwendig.

Die Abtrenneinheit kann erfindungsgemäß durch eine Bewegung zwischen den zwei Positionen wechseln. Dies schließt nicht aus, dass sie auch mehr als zwei Positionen einnehmen kann. Bevorzugt ist, dass sie auch mindestens eine weitere Position einnehmen kann, z.B. eine Zwischenposition oder eine durch einen weitere Bewegung erreichbare Position.

Die Bewegung ist zunächst beliebig. Sie umfasst jedoch bevorzugt Verschiebungen oder Drehungen (z.B. Schwenken). Gemäß einer bevorzugten Ausführungsform ist die Abtrenneinheit mit ihrem einem Ende drehbar (insbesondere drehbar gelagert) in der Abferkelbucht befestigt und kann mit ihrem anderen Ende verschwenkt werden, insbesondere über einen Bereich in Form eines Kreissegments. Auf diese Weise kann durch ein Verschwenken der Abtrenneinheit in die eine Position die Sau im Fixierbereich fixiert werden und nach einem Verschwenken in die zweite Position der Zugang der Sau zum Liegebereich ermöglicht und gleichzeitig das Ferkelnest vom Liegebereich abgetrennt werden.

Selbstverständlich ist bevorzugt, die Abferkelbucht so auszugestalten, dass die Abtrenneinheit zumindest in der Fixierposition, insbesondere aber auch in der Ferkelnestposition verriegelbar ist, so dass die Abtrenneinheit ohne ein Lösen der Verriegelung ihre Position nicht ändern kann.

In einer bevorzugten Ausführungsform umfasst die Abferkelbucht zusätzlich mindestens eine Trog für die Sau (Sauentrog), bevorzugt im Fixierbereich. Bevorzugt ist auch ein Trog für die Ferkel (Ferkeltrog) vorgesehen.

In einer bevorzugten Ausführungsform umfasst die Abferkelbucht zusätzlich mindestens eine Tränke für die Sau, bevorzugt im Fixierbereich. Bevorzugt ist auch eine Tränke für die Ferkel vorgesehen.

In einer bevorzugten Ausführungsform ist die Abferkelbucht an einem Gangbereich angeordnet oder umfasst einen Gangbereich, wobei dieser Gangbereich dem Erreichen der Abferkelbucht dient und insbesondere parallel zum Zugangsbereich, Ferkelnest und Sauentrog verläuft..

Gemäß einer bevorzugten Ausführungsform umfasst die Abtrenneinheit eine verriegelbare Tür, welche von ihrer Größe so beschaffen ist, dass in geöffneten Zustand der Tür die Sau hindurchlaufen kann und die Sau in der Ferkelnestposition vom Zugangsbereich in den Liegebereich gelangt. Gemäß einer anderen bevorzugten Ausführungsform umfasst die Abtrenneinheit eine verriegelbare Tür, welche von ihrer Größe so beschaffen ist, dass im geschlossenen Zustand der Tür ein Ferkel aber keine Sau durchlaufen kann. Auf diese Weise kann das Ferkel im geschlossenen Zustand vom Liegebereich in den Zugangsbereich (Anfütterungsbereich) gelangen.

Gemäß einer weiteren bevorzugten Ausführungsform kann die Abtrenneinheit unten einen Spalt von einer so geringen Höhe aufweisen, dass die Ferkel noch in ihr Ferkelnest gelangen können, jedoch der Muttersau in dieses Abteil der Zugang verwehrt ist. Die Ferkel kommen dann in den Liegebereich nur zum Saugen und kehren, dann in ihr Ferkelnest zurück, wo sie vor der Gefahr sicher sind, von der schweren Muttersau erdrückt zu werden.

Als zusätzliche Maßnahme gegen ein Erdrücken der Ferkel kann in dem Liegebereich zumindest ein gekrümmter, vorzugsweise elliptischer Abweisbügel oder zumindest ein Abweisbrett zum Schutz der Ferkel vor Erdrücken durch die Sau angeordnet sein.

Bei der Abtrennung des Ferkelnests vom Liegebereich bildet die Abtrennvorrichtung in ihrer zweiten Position bevorzugt eine Seitenwand des Ferkelnests.

Um ein Abfließen von Exkrementen in eine darunter ausgeführte Wanne zu ermöglichen, ist vorzugsweise der Boden des Liegebereichs und oder des Fixierbereichs zumindest abschnittsweise perforiert ausgebildet bzw. zumindest teilweise durch perforierte Elemente gebildet.

Ein Vorteil der vorangehend beschriebenen Erfindung ist, dass es möglich ist, mit wenigen Handgriffen die Sau in einem vorgesehenen Bereich kurzzeitig zu fixieren und anschließend ohne großen Aufwand der Sau einen großzügigen Liegebereich zur Verfügung zu stellen, so dass das Flächenangebot für die Sau bestmöglich genutzt werden kann.

Ein weiterer Vorteil ist, dass alle relevanten Bereiche wie Fixierbereich und Ferkelnest einfach von einem zentralen Gang aus erreicht werden können, wobei gleichzeitig ohne großen Aufwand die Sauenbucht betreten werden kann.

Die Erfindung samt weiteren Vorteilen wird im Folgenden anhand einiger Ausführungsbeispiele näher erläutert.
- Fig. 1: zeigt in schematisch stark vereinfachter Darstellung einen Grundriss von einer erfindungsgemäßen Abferkelbucht;
- Fig. 2 & 3: verdeutlichen schematisch die zwei Positionen des Trenngitters.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellten Figuren bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

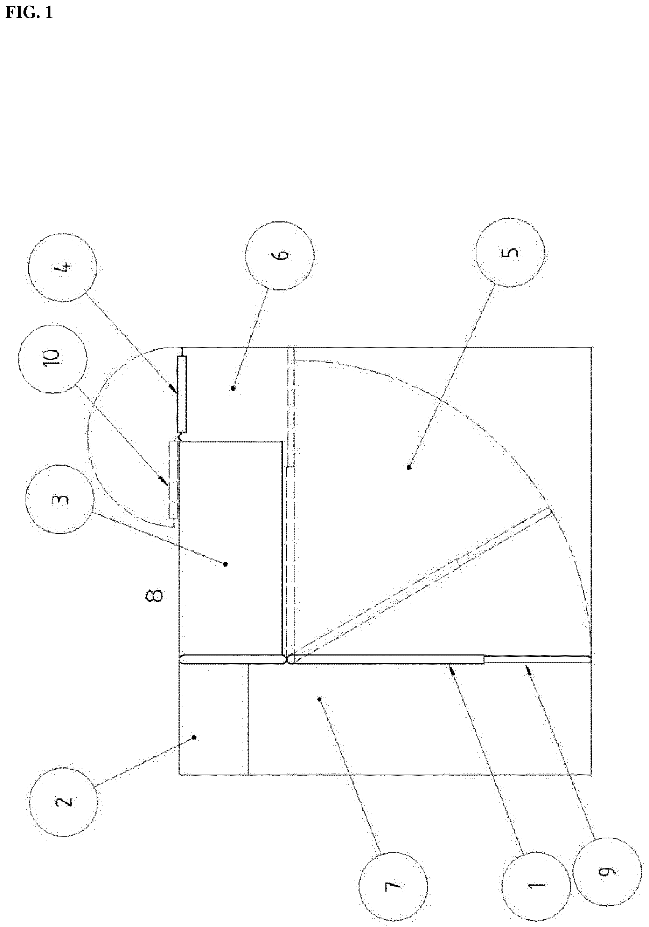

Figur 1 zeigt in schematisch stark vereinfachter Darstellung einen Grundriss einer erfindungsgemäßen Abferkelbucht. Bevorzugt liegt sie an einem Gang 8 und ist über eine Zugangstür 4 betretbar. Sie umfasst einen Fixierbereich 7 mit einem Sauenfutterplatz 2 ein Ferkelnest 3, einen Zugangsbereich 6 und eine Liegebereich 5. Das Ferkelnest 3 und der Fixierbereich 7 grenzen beide an den Liegebereich 5, sind jedoch mittels eines schwenkbaren Trenngitters 1 voneinander räumlich getrennt.

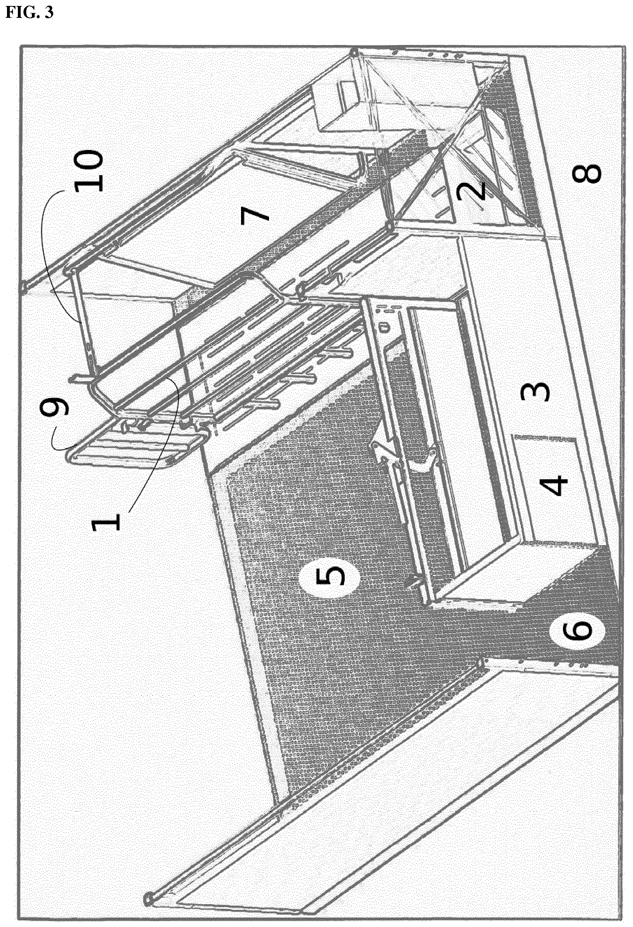

Mittels des schwenkbaren Trenngitters 1, welches hier als Abtrenneinheit verwendet wird, kann die Sau im Fixierbereich 7 fixiert werden (eingezeichnete vollstrichige Position oder Figur 3).

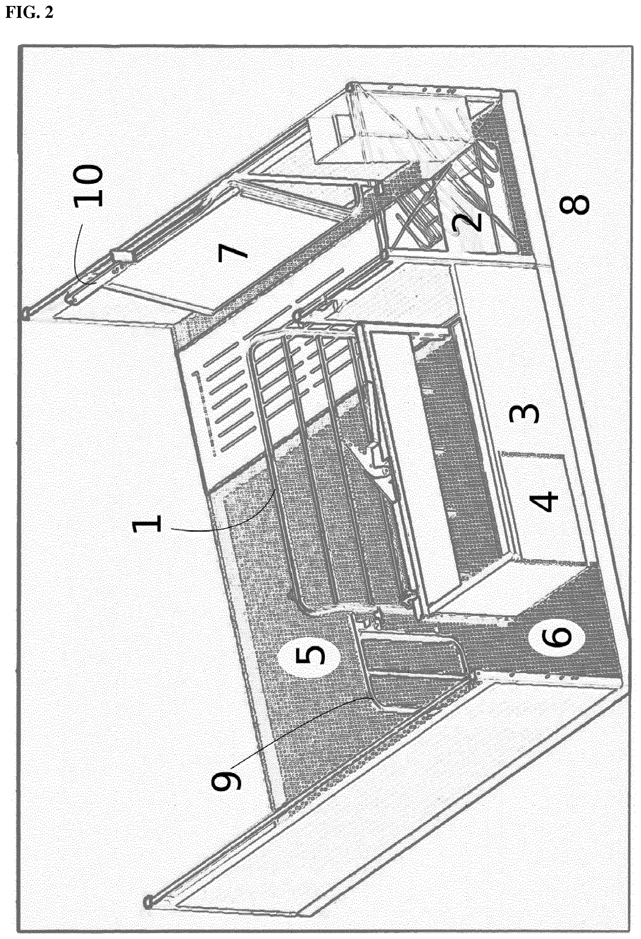

Durch Aufschwenken des Trenngitters 1 in Richtung des Ferkelnests (gestrichelte Mittelposition des Gitters oder Figur 2) kann der Fixierbereich 7 zum Liegebereich 5 hin geöffnet werden und damit der Sau den Zugang zum Liegebereich 5 ermöglicht werden. In der Endposition der Trenngitters (gestrichelte Trenngitterposition am Ferkelnest) kann das Ferkelnest 3 vom Liegebereich 5 abgetrennt werden.

Durch das Trenngitter 1 wird nicht nur das Ferkelnest 3 vom Liegebereich 5 der Sau getrennt. Gleichzeitig kann der Platz im Zugangsbereich, der durch die Zugangstür 4 nach außen abgesperrt ist, auch als Anfütterungsplatz für die Ferkel verwendet werden, da auch dieser Platz vom Trenngitter 1 vor der Sau geschützt ist.

Mittels einer Zugangstür 9 in dem Trenngitter kann die Sau an der Abtrenneinheit vorbei in die Abferkelbucht hineingebracht werden. Die Arretierung des Trenngitters ist mittels eines Fixierbügels 10 möglich.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereiche beginnen mit einer unteren Grenze von 1 oder größer und enden bei einer oberen Grenze von 10 oder weniger, z.B. 1 bis 1,7 oder 3,2 bis 8,1 oder 5,5 bis 10.

Abschließend sei noch darauf hingewiesen, dass die Ausführungsbeispiele sich auf mögliche Ausführungsvarianten der erfindungsgemäßen Abferkelbucht beziehen, wobei an dieser Stelle bemerkt sei, dass die Erfindung nicht auf das speziell dargestellte Ausführungsbeispiel derselben eingeschränkt ist, sondern vielmehr auch alle anderen nicht dargestellten und beschriebenen Ausführungsvarianten, welche unter den Wortlaut des unabhängigen Anspruchs fallen vom Schutzbereich mit umfasst sind.

### Bezugszeichenaufstellung

- 1: Trenngitter
- 2: Sauenfutterplatz
- 3: Ferkelnest
- 4: Zugangstür
- 5: Liegebereich
- 6: Zugangsbereich
- 7: Fixierbereich
- 8: Gang
- 9: Zugangstür Abtrenneinheit
- 10: Fixierbügel

## Patentansprüche

1. Abferkelbucht umfassend eine Umrandung, einen Zugangsbereich (6), einen Fixierbereich mit einem Fressbereich (2), einen Liegebereich (5) und ein Ferkelnest (3), wobei die Abferkelbucht mindestens eine Abtrenneinheit umfasst, welche beweglich gestaltet ist, so dass die Abtrenneinheit zumindest zwei Positionen einnehmen kann, und so ausgestaltet und angeordnet ist, dass in der einen Position die Sau im Fixierbereich fixiert wird (Fixierposition) und in der zweiten Position der Zugang der Sau zum Liegebereich (5) ermöglicht wird und gleichzeitig das Ferkelnest (3) von der Abtrenneinheit vom Liegebereich abgetrennt wird (Ferkelnestposition), **dadurch gekennzeichnet, dass** das Ferkelnest (3) zwischen Zugangsbereich (6) und Fixierbereich (7) angeordnet ist.

2. Abferkelbucht nach Anspruch 1, **dadurch gekennzeichnet, dass** der Fixierbereich (7) durch einen Teil der Umrandung begrenzt ist, wobei die Abtrenneinheit in ihrer einen Position den Fixierbereich (7) von der übrigen Abferkelbucht abtrennt und dass der Liegebereich (5) durch einen Teil der Umrandung begrenzt wird, wobei die Abtrenneinheit in ihrer zweiten Position den Liegebereich (5) vom Ferkelnest (3) abtrennt, wobei die Abferkelbucht bevorzugt so ausgestaltet ist, dass in dem Falle, in dem sich die Abtrenneinheit in der zweiten Position befindet, Fixierbereich (7) und Liegebereich (5) einen zusammenhängenden Bereich bilden.

3. Abferkelbucht nach einem der vorangehenden Ansprüche, **dadurch gekennzeichnet, dass** die Abtrenneinheit durch eine Bewegung zwischen den zwei Positionen wechseln kann und auch mehr als zwei Positionen einnehmen kann, wobei die Bewegung Verschiebungen oder Drehungen umfasst, wobei die Abtrenneinheit mit ihrem einem Ende drehbar in der Abferkelbucht befestigt ist und mit ihrem anderen Ende über einen Bereich in Form eines Kreissegments verschwenkt werden kann.

4. Abferkelbucht nach einem der vorangehenden Ansprüche, **dadurch gekennzeichnet, dass** die Abtrenneinheit zumindest in der Fixierposition, insbesondere aber auch in der Ferkelnestposition, verriegelbar ist, so dass die Abtrenneinheit ohne ein Lösen der Verriegelung ihre Position nicht ändern kann.

5. Abferkelbucht nach einem der vorangehenden Ansprüche, **dadurch gekennzeichnet, dass** in allen Positionen der Abtrenneinheit der Zugangsbereich (6) vom Fixierbereich (7) durch die Abtrenneinheit abgetrennt ist.

6. Abferkelbucht nach einem der vorangehenden Ansprüche, **dadurch gekennzeichnet, dass** das Ferkelnest (3) so angeordnet ist, dass es in beiden Positionen der Abtrenneinheit stets vom Zugangsbereich (6) und/oder einem Gang (8) aus bedient werden kann.

7. Abferkelbucht nach einem der vorangehenden Ansprüche, **dadurch gekennzeichnet, dass** die Abtrenneinheit zumindest eine, vorzugsweise mit einer Klappe, verschließbare und/oder verriegelbare Öffnung und/oder Tür (9) aufweist, die den Durchtrieb der Sau ermöglicht.

8. Abferkelbucht nach einem der vorangehenden Ansprüche, **dadurch gekennzeichnet, dass** die Abtrenneinheit unten einen Spalt von einer so geringen Höhe aufweisen, dass die Ferkel noch in ihr Ferkelnest (3) gelangen können, jedoch der Muttersau in dieses Abteil der Zugang verwehrt ist.

## Claims

1. Farrowing pen comprising an edging, an access area (6), a fixation area with a feeding area (2), resting area (5) and a piglet nest (3), wherein the farrowing pen comprises at least one separation unit, which is designed to be moveable so that the separation unit can assume at least two positions, and is designed and arranged in such a way that, in the one position, the sow is fixated in the fixation area (fixation position) and, in the second position, the sow's access to the resting area (5) is made possible, and, at the same time, the piglet nest (3) is separated from the resting area (piglet-nest position), **characterized in that** the piglet nest (3) is arranged between the access area (6) and the fixation area (7).

2. Farrowing pen according to claim 1, **characterized in that** the fixation area (7) is limited by a part of the edging, wherein the separation unit separates the fixation area (7) from the rest of the farrowing pen in its one position, and that the resting area (5) is limited by a part of the edging, wherein the separation unit separates the resting area (5) from the piglet nest (3) in its second position, wherein the farrowing pen is preferably designed in such a way that the fixation area (7) and the resting area (5) form a connected area in the case of the separating unit being in the second position.

3. Farrowing pen according to any one of the preceding claims, **characterized in that** the separation unit can change by means of a movement between the two positions and can also assume more than two positions, wherein the movement comprises shifts or rotations, wherein the separation unit is rotatably attached within the farrowing pen by means of its one end and can be pivoted by means of its other end across and area in the form of a circular segment.

4. Farrowing pen according to any one of the preceding claims, **characterized in that** the separation unit can be locked at least in the fixation position, however, in particular, also in the piglet-nest position, so that the separation unit cannot change its position without a releasing the locking system.

5. Farrowing pen according to any one of the preceding claims, **characterized in that**, in all positions of the separation unit, the access area (6) is separated from the fixation area (7) by the separation unit.

6. Farrowing pen according to any one of the preceding claims, **characterized in that** the piglet nest (3) is arranged in such a way that, in both positions of the separation unit, it can always be operated from the access area (6) and/or a walkway (8).

7. Farrowing pen according to any one of the preceding claims, **characterized in that** the separation unit comprises at least one sealable or lockable opening and/or door (9), preferably by means of a flap, which makes it possible for the sows to be driven through.

8. Farrowing pen according to any one of the preceding claims, **characterized in that** the separation unit comprises a gap with such a low height that the piglets can still enter into their piglet nest (3), however, the sow is denied access into this compartment.

## Revendications

1. Case de mise bas comprenant une bordure, une zone d'accès (6), une zone de fixation avec une zone d'alimentation (2), une zone de repos (5) et un nid à porcelets (3), la case de mise bas comprenant au moins une unité de séparation qui est conçue de manière mobile de façon à ce que l'unité de séparation puisse prendre au moins deux positions et étant conçue et disposée de façon à ce que, dans une position, la truie soit fixée dans la zone de fixation (position de fixation) et, dans la deuxième position, l'accès de la truie à la zone de repos (5) soit possible et en même temps le nid à porcelets (3) soit séparé de la zone de repos par l'unité de séparation (position de nid à porcelets), **caractérisée en ce que** le nid à porcelets (3) est disposé entre la zone d'accès (6) et la zone de fixation (7).

2. Case de mise bas selon la revendication 1, **caractérisée en ce que** la zone de fixation (7) est limitée par une partie de la bordure, l'unité de séparation séparant, dans une de ses positions, la zone de fixation (7) du reste de la case de mise bas et **en ce que** la zone de repos (5) est limitée par une partie de la bordure, l'unité de séparation séparant, dans sa deuxième position, la zone de repos (5) du nid à porcelets (3), la case de mise bas étant de préférence conçue de façon à ce que, dans le cas où l'unité de séparation se trouve dans la deuxième position, la zone de fixation (7) et la zone de repos (5) constituent une zone continue.

3. Case de mise bas selon l'une des revendications précédentes, **caractérisée en ce que** l'unité de séparation peut changer entre les deux positions par un mouvement et peut également prendre plus de deux positions, le mouvement comprenant des coulissements ou des rotations, l'unité de séparation étant fixée de manière rotative dans la case de mis bas avec une de ses extrémités et, avec l'autre extrémité, elle peut être pivotée sur une zone en forme de segment de cercle.

4. Case de mise bas selon l'une des revendications précédentes, **caractérisée en ce que** l'unité de séparation peut être verrouillée, au moins dans la position de fixation, mais également plus particulièrement dans la position de nid à porcelets, de façon à ce que l'unité de séparation ne puisse pas changer de position sans un déverrouillage.

5. Case de mise bas selon l'une des revendications précédentes, **caractérisée en ce que**, dans toutes les positions de l'unité de séparation, la zone d'accès (6) est séparée de la zone de fixation (7) par l'unité de séparation.

6. Case de mise bas selon l'une des revendications précédentes, **caractérisée en ce que** le nid à porcelets (3) est disposé de façon à ce qu'il puisse être contrôlé, dans les deux positions de l'unité de séparation, à partir de la zone d'accès (6) et/ou d'un passage (8).

7. Case de mise bas selon l'une des revendications précédentes, **caractérisée en ce que** l'unité de séparation comprend au moins une ouverture et/ou une porte (9) pouvant être obturée et/ou verrouillée avec un clapet, qui permet le passage de la truie.

8. Case de mise bas selon l'une des revendications précédentes, **caractérisée en ce que** l'unité de séparation comprend, en bas, un interstice d'une hauteur telle que les porcelets puissent aller dans le nid à porcelets (3) mais que la truie ne puisse pas accéder à ce compartiment.
